# FASCICULE DE BREVET EUROPEEN

(11) **EP 3 713 460 B1**
(45) Date de publication et mention de la délivrance du brevet: **18.08.2021**
(21) Numéro de dépôt: 18807113.8
(22) Date de dépôt: 05.11.2018
(51) Int. Cl.: A47J 31/40

(54) **MACHINE A CAFE MUNIE D'UN DISPOSITIF DE TRANSFERT DE MOUTURE**
MIT EINER VORRICHTUNG ZUM TRANSFER VON KAFFEESATZ AUSGESTATTETE KAFFEEMASCHINE
COFFEE MACHINE EQUIPPED WITH A DEVICE FOR TRANSFERRING COFFEE GROUNDS

(30) Priorité: 22.11.2017 FR 1761064
(43) Date de publication de la demande: 30.09.2020
(73) Titulaire: SEB S.A., 69130 Ecully (FR)
(72) Inventeur: MORIN, Gilles, 69290 Pollionnay (FR); PAYEN, Christophe, 21380 Asnieres Les Dijon (FR); RUSSIER, Fabien, 21000 Dijon (FR)
(74) Mandataire: SEB Développement
(86) Numéro de dépôt international: PCT/FR2018/052724
(87) Numéro de publication internationale: WO 2019/102090

(56) Documents cités:
- WO-A1-2007/051558
- WO-A1-2007/086744
- US-A- 3 305 139

## Description

La présente invention concerne une machine à café qui est équipée d'un réservoir de stockage de café moulu, d'un porte-filtre constituant une zone d'infusion et d'un dispositif de transfert de mouture de café du réservoir vers le porte-filtre, de l'eau chaude étant apte à être déversée dans le porte-filtre contenant de la mouture en vue de la préparation du café.

L'invention porte tout particulièrement sur un système de commande du dispositif de transfert de mouture agencé sur la machine à café.

On connait du document EP0536714 une machine à café comportant une zone d'infusion, un réservoir de stockage de café moulu agencé au-dessus de la zone d'infusion et un dispositif de transfert de mouture du réservoir de stockage vers la zone d'infusion à travers un orifice. La machine à café comprend un système de commande comportant un organe de sélection d'une quantité de mouture à distribuer. Le dispositif de transfert de mouture comporte un organe de distribution entrainé en rotation par un moteur. De l'eau chaude associée à de la vapeur est déversée dans le porte-filtre contenant de la mouture en vue de la préparation du café.

Cependant, dans le dispositif de transfert de mouture de cette machine à café, l'orifice à travers lequel la mouture passe avant de tomber dans la zone d'infusion n'est pas fermé. Ainsi de la vapeur peut remonter dans le dispositif de transfert et humidifier la mouture. La mouture humidifiée va ensuite sécher pour former des amas solides et adhérents qui encrassent le dispositif de transfert de mouture et qui vont perturber la distribution de mouture.

De plus, lorsque la machine à café est agitée, notamment pour la déplacer, une quantité de mouture peut tomber de manière non désirée à travers l'orifice dans ou en dehors de la zone d'infusion. Ainsi, la machine à café est salie. De plus, lors du prochain cycle de préparation du café qui sera lancé, la machine à café comptabilisera la quantité de mouture tombée de manière non désirée dans la quantité de mouture à distribuer. Ainsi, la quantité de mouture à distribuer que l'utilisateur a sélectionné ne correspondra pas exactement à la quantité distribuée par le dispositif de transfert de mouture.

On connait également du document US3305139 une machine à café munie d'un dispositif de transfert de mouture.

Le but de la présente invention est de remédier aux inconvénients précités et de proposer une machine à café qui présente un fonctionnement fiable et dont le dispositif de transfert de mouture distribue de manière précise la quantité de mouture à distribuer sélectionnée par l'utilisateur.

Un autre but de l'invention est de proposer une machine à café qui soit de conception simple et économique à mettre en œuvre.

Ces buts sont atteints avec une machine à café comportant une zone d'infusion, un réservoir de stockage de café moulu agencé au-dessus de la zone d'infusion et un dispositif de transfert de mouture du réservoir de stockage vers la zone d'infusion à travers un orifice ainsi qu'un système de commande comportant au moins un organe de sélection d'une quantité de mouture à distribuer et des moyens de mesure et/ou d'évaluation de ladite quantité de mouture à distribuer, ledit dispositif de transfert de mouture comportant un organe de distribution entrainé en rotation par un moteur, le dispositif de transfert de mouture comportant un organe de manœuvre d'un dispositif d'ouverture et de fermeture de l'orifice, ledit dispositif d'ouverture et de fermeture étant mobile entre une position ouverte et une position fermée, l'organe de manœuvre étant mobile entre une position activée dans laquelle le dispositif d'ouverture et de fermeture est en position ouverte, et une position de repos dans laquelle le dispositif d'ouverture et de fermeture est en position fermée ; caractérisée en ce que le système de commande comporte un organe de détection de la position ouverte du dispositif d'ouverture et de fermeture et un moyen de coupure de l'alimentation du moteur qui coupe l'alimentation du moteur après la distribution de la quantité de mouture à distribuer, le système de commande devant détecter la position ouverte avec l'organe de détection pour alimenter le moteur et transférer la quantité de mouture à distribuer et le système de commande coupant l'alimentation du moteur lorsque les moyens de mesure et/ou d'évaluation détectent que la quantité de mouture distribuée correspond à la quantité de mouture à distribuer sélectionnée.

Le dispositif de transfert de mouture comporte un dispositif d'ouverture et de fermeture de l'orifice qui évite les remontées de vapeur et les fuites non désirées de mouture. Ainsi, le dispositif de transfert présente un fonctionnement fiable.

Le déplacement de l'organe de manœuvre de la position de repos à la position activée ouvre l'orifice et l'organe de détection détecte la position ouverte du dispositif d'ouverture et de fermeture pour démarrer le transfert de mouture. C'est le système de commande qui arrête le moteur une fois que le dispositif de transfert a transféré exactement la quantité de mouture à distribuer sélectionnée par l'utilisateur et non l'organe de manœuvre qui est toujours en position activé dans laquelle le dispositif d'ouverture et de fermeture est en position ouverte. Ainsi, la quantité de mouture transférée correspond de manière précise à la quantité de mouture à distribuer sélectionnée par l'utilisateur.

De manière avantageuse, l'organe de détection de la position ouverte du dispositif d'ouverture et de fermeture est formé par un interrupteur.

Avantageusement, le système de commande comporte un afficheur muni d'une zone d'affichage d'un nombre de tasses de café à préparer, l'organe de sélection de la quantité de mouture à distribuer permettant de sélectionner ledit nombre de tasses.

Ainsi, le système de commande détermine une quantité de mouture à distribuer à partir du nombre de tasses de café sélectionné par l'utilisateur.

De préférence, les moyens de mesure et/ou d'évaluation de la quantité de mouture à distribuer comporte une mémoire agencée dans le système de commande et dans laquelle est stocké un temps prédéterminé d'alimentation du moteur pour distribuer une quantité de mouture pour une tasse.

Ainsi, le système de commande détermine le temps d'alimentation du moteur pour transférer la quantité de mouture à distribuer en multipliant le temps prédéterminé par le nombre de tasses de café sélectionné par l'utilisateur.

De manière avantageuse, le nombre de tasses de café à préparer affichée sur l'afficheur croit ou décroit au fur et à mesure que le temps prédéterminé pour distribuer une quantité de mouture pour une tasse est écoulé.

Avantageusement, le système de commande comporte un organe de sélection de la force du café qui accroit et/ou décroit le temps prédéterminé d'alimentation du moteur.

Ainsi, la quantité de mouture de café distribuée pour une tasse est accrue/décrue en fonction de la position de l'organe de sélection de la force du café. Par force du café, on comprend également intensité du café.

De manière avantageuse, l'organe de sélection de la force du café comporte par exemple trois niveaux et l'afficheur est muni d'une zone d'affichage du niveau de la force du café sélectionnée.

De préférence, la mémoire du système de commande comporte une table associant un numéro d'ordre n de distribution d'une tasse et un temps prédéterminé Tn, au moins un temps prédéterminé Tn étant supérieur au temps prédéterminé Tn+1.

Si la quantité de mouture par tasse est identique, on sait qu'un café infusé en quantité importante, par exemple 12 tasses, sera plus fort et aura plus de gout qu'un café réalisé en petite quantité, par exemple une ou deux tasses.

Ainsi la quantité de mouture distribuée pour la 1^{ère} tasse peut être supérieure à la quantité de mouture distribuée pour la 2^{ème} tasse et ainsi de suite pour ajuster la force et le gout du café si l'utilisateur sélectionne un nombre de tasses réduit.

Une telle disposition permet donc d'améliorer la régularité de la force et du gout du café quel que soit le nombre de tasses programmé par l'utilisateur.

De manière avantageuse, le moyen de coupure du moteur est formé par un triac, par un transistor ou par un relais.

Le moyen de coupure pour un moteur DC est formé par un transistor ou par un relais et pour un moteur AC par un triac ou un relais.

Avantageusement le dispositif de transfert de mouture comporte un ressort de rappel de l'organe de manœuvre de la position activée vers la position de repos et du dispositif d'ouverture et de fermeture de l'orifice, de la position ouverte vers la position fermée.

Une telle disposition permet d'obtenir un retour automatique de l'organe de manœuvre en position de repos.

Avantageusement, l'organe de manœuvre est formé par un levier de manœuvre.

Un levier de manœuvre est un organe simple et ergonomique pour manœuvrer le dispositif d'ouverture et de fermeture de l'orifice.

De préférence, le levier de manœuvre est agencé de manière verticale dans la position de repos et basculé de manière horizontale dans la position activée.

Avantageusement, le dispositif de transfert comporte des moyens de translation du dispositif d'ouverture et de fermeture de l'orifice, de la position ouverte vers la position fermée et réciproquement.

En outre, l'organe d'ouverture et de fermeture de l'orifice comporte une partie ouverte qui comprend une paroi inclinée. La paroi inclinée est configurée pour être positionnée sous l'orifice et pour diriger vers la zone d'infusion la mouture passant au travers de cet orifice en position d'ouverture, et pour être décalée de l'orifice en position fermée.

Par ailleurs, le dispositif de transfert comporte un organe de nettoyage de ladite paroi inclinée lorsqu'elle passe de la position ouverte à la position fermée et réciproquement.

Ainsi, le déplacement de l'organe dans la position ouverte assure le positionnement de la paroi inclinée sous l'orifice, ce qui libère cet orifice et permet le transfert de la mouture du réservoir de stockage vers la zone d'infusion, la pente de cette paroi inclinée assurant le guidage de la mouture vers ladite zone d'infusion. Inversement, le déplacement de l'organe dans la position fermée assure instantanément l'obturation de cet orifice.

Le nettoyage de la partie inclinée à chaque déplacement de l'organe dans un sens ou dans l'autre, évite son encrassement, ce qui garantit un dosage convenable de la mouture à chaque transfert dans la zone d'infusion.

Avantageusement, l'organe de nettoyage comporte une paroi verticale coopérant avec la paroi inclinée pour la nettoyer lors du déplacement de l'organe d'ouverture et de fermeture de la position ouverte vers la position fermée et inversement.

Avantageusement, l'organe d'ouverture et de fermeture de l'orifice comporte une paroi horizontale qui obstrue l'orifice en position fermée. De préférence cette paroi horizontale forme avec la partie ouverte comportant la paroi inclinée une pièce monobloc.

De préférence, le dispositif de transfert de mouture comporte un système pignon/crémaillère, le levier étant assujetti au pignon et la crémaillère étant assujettie à l'organe d'ouverture et de fermeture de l'orifice.

De préférence, le dispositif de transfert de mouture comporte un disque entrainé en rotation par un moteur. De préférence, le disque est entraîné en rotation selon un axe vertical et le moteur est agencé au centre du disque selon cet axe vertical.

L'invention sera mieux comprise à l'étude du mode de réalisation pris à titre nullement limitatif et illustré dans les figures annexées dans lesquelles :
Les figures 1 et 2 illustrent la machine à café dans deux positions correspondant respectivement à l'obturation de l'orifice entre le réservoir de stockage et la zone d'infusion et à l'ouverture de l'orifice pour le transfert de la mouture du réservoir de stockage vers la zone d'infusion ;
La figure 3 illustre la machine à café en coupe afin de mettre en évidence certains de ses éléments ;
Les figures 4 et 5 illustrent respectivement en vue de dessus et en vue de dessous le réservoir de stockage avec l'organe d'ouverture et de fermeture de l'orifice en position fermée ;
Les figures 6 et 7 illustrent en vue de dessous selon deux angles différents le réservoir de stockage avec l'organe d'ouverture et de fermeture de l'orifice en position ouverte ;
Les figures 8 et 9 illustrent l'organe d'ouverture et de fermeture de l'orifice avec un levier de commande de cet organe, respectivement en position fermée et en position ouverte.

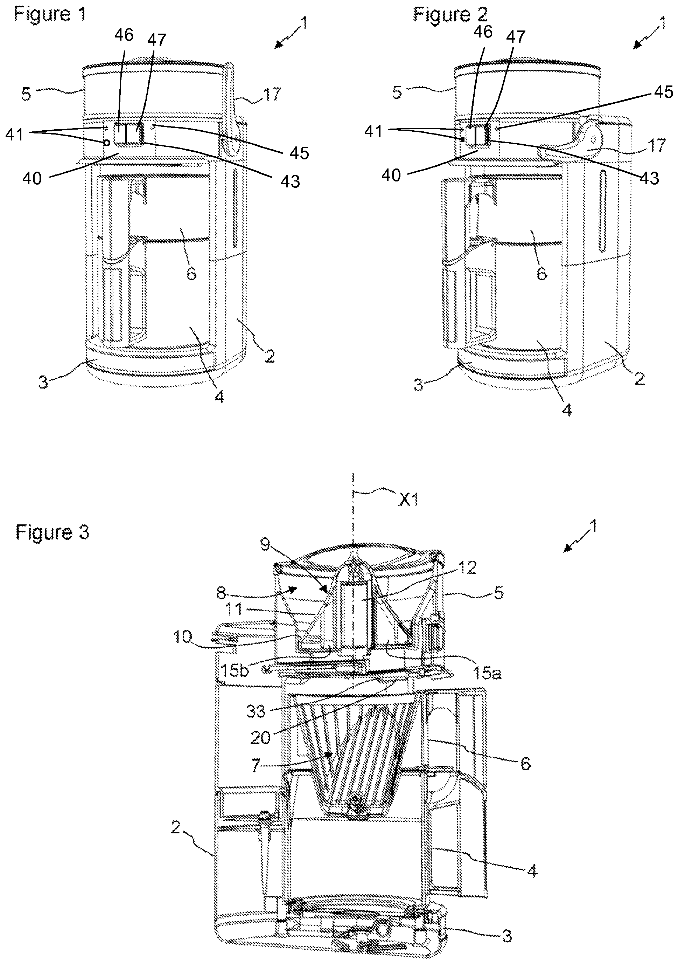

Les figures 1 à 3 montrent une machine à café 1 dans un mode préféré de conception. Le terme « machine 1 » est utilisé dans la suite de la description pour définir ladite machine à café 1.

La machine 1 comprend un corps 2 muni d'une base chauffante 3 configurée pour réceptionner une verseuse 4 dans laquelle est déversée la boisson de café (non illustrée). La machine 1 comprend un réservoir de stockage 5 agencé au-dessus d'un porte-filtre 6 qui définit une zone d'infusion 7.

Le réservoir de stockage 5 définit un volume 8 permettant la réception d'une certaine quantité de café moulu, par exemple l'équivalent d'un paquet de 250 grammes de café moulu, que l'on trouve généralement en vente dans le commerce. Ce réservoir de stockage 5 intègre un organe de distribution formé par une turbine 9 qui comprend un disque 10 à sa base, ledit disque 10 étant prolongé vers le haut par un corps 11 plus ou moins en forme de cloche. Cette turbine 9 est entraînée en rotation selon un premier axe X1 vertical au moyen d'un moteur 12 agencé selon cet axe X1 à l'intérieur du corps 11, comme l'illustre la figure 3. On constate sur les figures 1 à 3 que le réservoir de stockage 5 est agencé dans le même axe vertical que le porte-filtre 6 et que la verseuse 4, en l'occurrence l'axe X1. Le réservoir de stockage 5 comprend un fond 13 muni d'un orifice 14 permettant le passage de la mouture de café dudit réservoir de stockage 5 vers la zone d'infusion 7 du porte-filtre 6. Le disque 10 est positionné au-dessus du fond 13 et de l'orifice 14. Le disque 10 comporte des pales 15a, 15b permettant d'amener de la mouture de café vers l'orifice 14 durant la rotation dudit disque 10, de sorte à la transférer du réservoir de stockage 5 vers le porte-filtre 6, lorsque cet orifice 14 est dégagé, comme cela est expliqué dans la suite de la description.

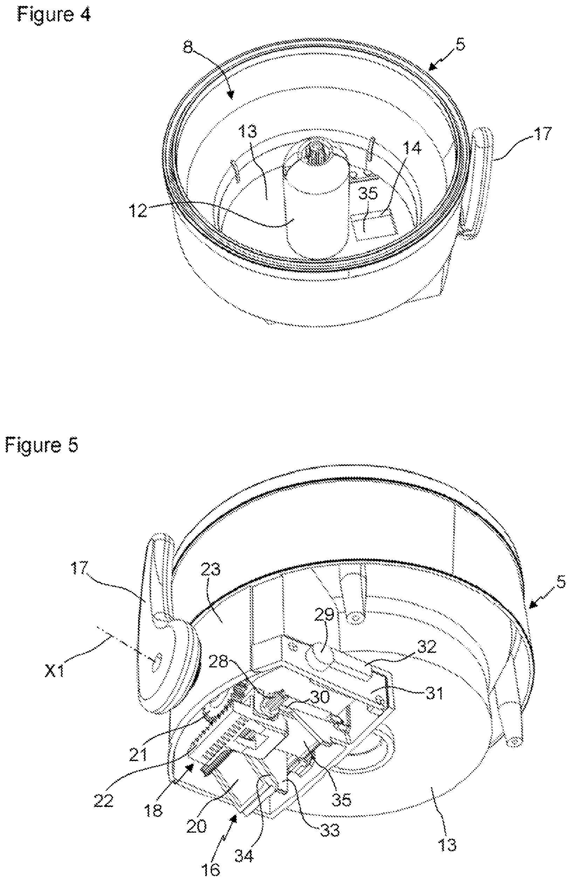

La machine 1 comprend un dispositif d'ouverture et de fermeture 16 de l'orifice 14. Le dispositif d'ouverture et de fermeture 16 est actionné au moyen d'un organe de manœuvre formé par un levier de manœuvre 17 agissant sur des moyens de translation 18, comme l'illustrent plus en détail les figures 4 à 9.

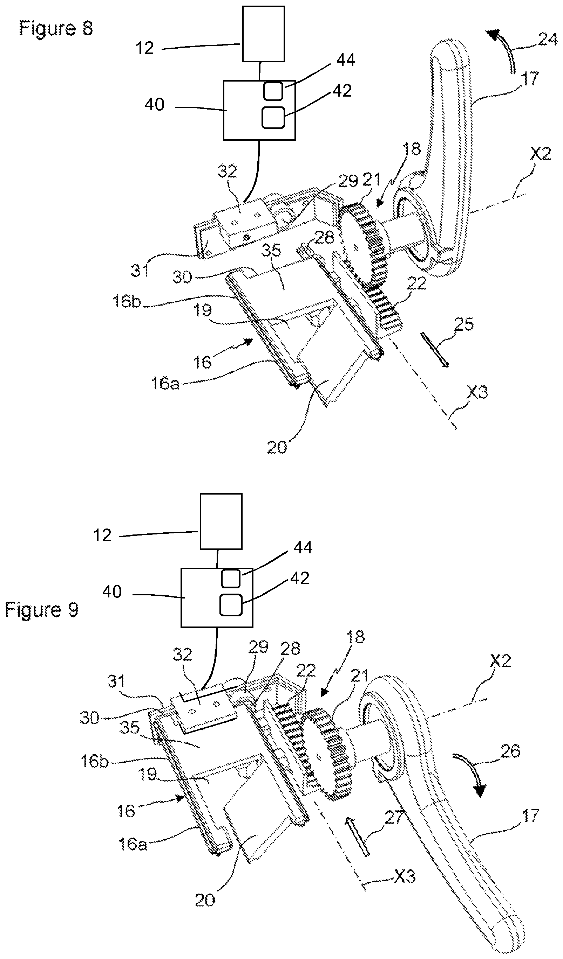

Le dispositif d'ouverture et de fermeture 16 comporte une première partie 16a définissant une ouverture 19 et une paroi inclinée 20 s'étendant en-dessous de cette ouverture 19, comme l'illustrent notamment les figures 8 et 9. Ce dispositif d'ouverture et de fermeture 16 comprend également une seconde partie 16b disposée dans le prolongement de la première partie 16a et définissant une paroi horizontale 35.

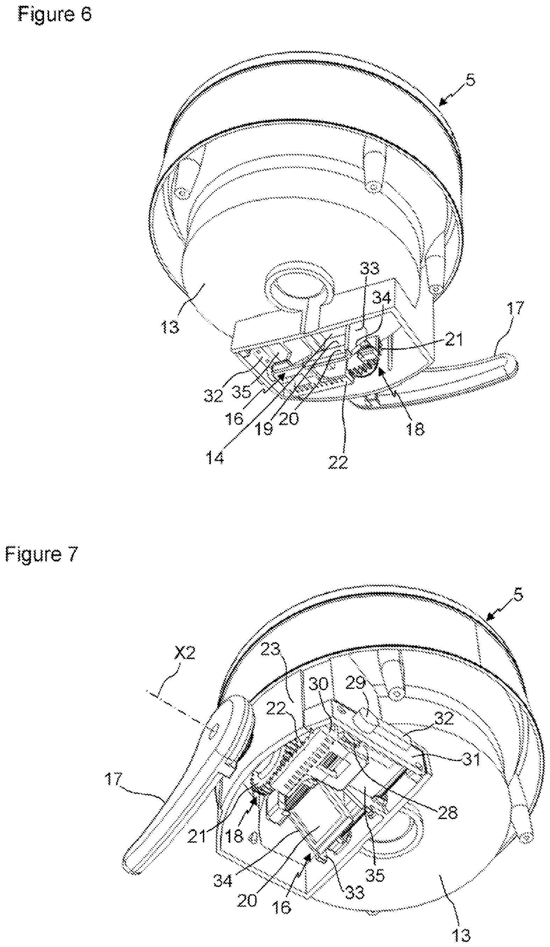

Les moyens de translation 18 comportent un système pignon 21 et crémaillère 22. Le levier de manœuvre 17 est monté à pivotement selon un second axe X2 horizontal, vis-à-vis d'une paroi 23 du réservoir de stockage 5, comme l'illustrent notamment les figures 5 et 7. Le pignon 21 est assujetti au levier de manœuvre 17 et tourne selon cet axe X2 lors de l'actionnement dudit levier de manœuvre 17. Ce pignon 21 engrène avec la crémaillère 22, la rotation du pignon 21 dans un sens ou dans l'autre entrainant la translation de la crémaillère 22 respectivement dans un sens ou dans l'autre, selon un troisième axe X3 horizontal illustré en figures 8 et 9. Le dispositif d'ouverture et de fermeture 16 est monté en liaison glissière vis-à-vis du fond 13 du réservoir de stockage 5, selon ce troisième axe X3. Ce dispositif d'ouverture et de fermeture 16 est assujetti à la crémaillère 22. Ainsi, comme l'illustre la figure 8, l'actionnement en rotation du levier de manœuvre 17 dans le sens de la première flèche 24 selon le second axe X2, entraîne une translation du dispositif d'ouverture et de fermeture 16 dans le sens de la seconde flèche 25 selon le troisième axe X3. Inversement, comme l'illustre la figure 9, l'actionnement en rotation du levier de manœuvre 17 dans le sens de la troisième flèche 26 selon le second axe X2, entraîne une translation du dispositif d'ouverture et de fermeture 16 dans le sens de la quatrième flèche 27 selon le troisième axe X3.

Lorsque le levier de manœuvre 17 est en position verticale vers le haut, comme l'illustrent les figures 1, 4, 5 et 8, la paroi horizontale 35 obture l'orifice 14. Inversement, lorsque le levier de manœuvre 17 est en position horizontale vers l'avant, comme l'illustrent les figures 2, 6, 7 et 9, l'ouverture 19 et la paroi inclinée 20 sont positionnées sous l'orifice 14, ce qui libère cet orifice 14 et autorise le transfert de la mouture de café du réservoir de stockage 5 vers le porte-filtre 6.

Un ressort (non illustré) est monté entre un plot 28 qui s'emboîte sur une première extrémité du ressort et un logement 29 qui réceptionne une seconde extrémité du ressort. Le plot 28 est agencé à l'extrémité arrière 30 du dispositif d'ouverture et de fermeture 16 et le logement 29 est agencé sur un rebord 31 du réservoir de stockage 5, comme l'illustrent les figures 5, 7, 8 et 9. Lorsque l'extrémité arrière 30 du dispositif d'ouverture et de fermeture 16 est en appui contre le rebord 31, dans la position d'ouverture correspondant à l'actionnement du levier de manœuvre vers sa position horizontale avant, tel qu'illustré en figures 7 et 9 notamment, le ressort est comprimé entre le plot 28 et le logement 29. Lorsque le levier de manœuvre 17 est lâché, le ressort se détend et assure le retour en position du dispositif d'ouverture et de fermeture 16 en position fermée, lequel se déplace alors dans le sens de la seconde flèche 25, ce qui fait pivoter ledit levier de manœuvre 17 dans le sens de la première flèche 24 et le ramène en position verticale vers le haut, illustrée notamment en figures 5 et 8.

Le réservoir de stockage 5 comprend en-dessous de son fond 13 un organe de nettoyage se présentant sous la forme d'une paroi verticale 33 munie d'un pan incliné 34 disposant d'une pente identique à celle de la paroi inclinée 20, comme l'illustrent les figures 5 et 6. Le pan incliné 34 est attenant à la paroi inclinée 20, de sorte à racler ladite paroi inclinée 20 durant le déplacement du dispositif d'ouverture et de fermeture 16 de la position ouverte à la position fermée, et inversement. Le nettoyage régulier de la paroi inclinée 20 évite l'accumulation de mouture de café sur celle-ci, due notamment à l'humidité présente du fait de la vapeur et de la condensation. Cela permet de doser précisément la mouture de café tombant dans le porte-filtre 6, à chaque activation du levier de manœuvre 17.

La machine 1 comprend un organe de détection de la position ouverte du dispositif d'ouverture et de fermeture 16 qui est formé par un interrupteur 32, agencé sur le rebord 31. L'interrupteur 32 est fermé lorsque l'extrémité arrière 30 du dispositif d'ouverture et de fermeture 16 vient contre le rebord 31, c'est-à-dire dans la position ouverte dans laquelle l'ouverture 19 et la paroi inclinée 20 sont disposées sous l'orifice 14. La fermeture de l'interrupteur 32 entraîne la mise en marche du moteur 12 et la rotation de la turbine 9, ce qui pousse la mouture de café au travers de l'orifice 14 et de l'ouverture 19, ladite mouture étant alors guidée par la pente de la paroi inclinée 20 durant sa chute dans le porte-filtre 6. La paroi inclinée 20 est orientée de manière à guider la mouture de café vers le centre du porte-filtre 6, comme l'illustre notamment la figure 3.

Tel que visible aux figures 1 et 2, la machine 1 comporte un système de commande 40 comprenant un afficheur 43. Le système de commande comporte un organe de sélection 41 du nombre de tasses de café à réaliser. L'organe de sélection 41 est formé par deux boutons : un bouton « plus » et un bouton « moins ». Le nombre de tasses est affiché dans une zone d'affichage 46 de l'afficheur 43. Le système de commande 40 comporte une mémoire 44 dans laquelle est stockée une table associant un temps prédéterminé Tn de rotation du moteur 12 à un numéro d'ordre n de distribution d'une tasse. Un exemple de table pour une machine 1 dont, par exemple, la capacité maximum est de 10 tasses est présenté ci-dessous. Le temps prédéterminé Tn est exprimé en secondes.

| n | 1 | 2 | 3 | 4 | 5 | 6 | 7 | 8 | 9 | 10 |
|---|---|---|---|---|---|---|---|---|---|---|
| Tn | 1,2 | 1,2 | 1 | 1 | 1 | 1 | 0,9 | 0,9 | 0,8 | 0,8 |

Par exemple, si l'utilisateur affiche 4 tasses sur l'afficheur 43 en agissant sur l'organe de sélection 41, le système de commande 40 alimentera le moteur 12 pendant un temps T = T1 +T2+T3+T4= 4,4 secondes.

Le système de commande 40 comporte un organe de sélection de la force du café 45 selon trois niveaux i : «doux» : i =1, «normal» : i=2 et «intense» : i=3. L'afficheur 43 est muni d'une zone d'affichage 47 du niveau de la force du café sélectionnée. La table ci-dessus correspond au niveau i=2. Le système de commande 40 décroit le temps prédéterminé Tn de rotation du moteur 12 de 20% lorsque le niveau i=2 est sélectionné et le système de commande 40 accroit le temps prédéterminé Tn de rotation du moteur 12 de 20% lorsque le niveau i=3 est sélectionné.

Par exemple, si l'utilisateur sélectionne 4 tasses comme dans l'exemple précédent et affiche le niveau i=3 sur l'afficheur 43 en agissant sur l'organe de sélection de la force du café 45, le système de commande 40 alimentera le moteur 12 pendant un temps T = (T1+T2+T3+T4) x 1,2 = 5,28 secondes.

Dans une première variante de réalisation, la mémoire comporte une table dans laquelle le temps est défini par tasse pour chaque niveau de force du café. Un exemple d'une telle table est donné ci-dessous.

| n | 1 | 2 | 3 | 4 | 5 | 6 | 7 | 8 | 9 | 10 |
|---|---|---|---|---|---|---|---|---|---|---|
| Tn pour i=1 | 1 | 1 | 0,8 | 0,8 | 0,8 | 0,8 | 0,7 | 0,7 | 0,6 | 0,6 |
| Tn pour i=2 | 1,2 | 1,2 | 1 | 1 | 1 | 1 | 0,9 | 0,9 | 0,8 | 0,8 |
| Tn pour i=3 | 1,4 | 1,4 | 1,2 | 1,2 | 1,2 | 1,2 | 1,1 | 1,1 | 1 | 1 |

Par exemple, si l'utilisateur sélectionne 4 tasses avec le niveau i=2, le système de commande 40 alimentera le moteur 12 pendant un temps T = 1,2+1,2+1+1 = 4,4s Dans une deuxième variante de réalisation, la mémoire comporte une table avec le temps moyen pour un nombre de tasses et pour un niveau de force de café sélectionné. Un exemple d'une telle table est donné ci-dessous.

| N | 1 | 2 | 3 | 4 | 5 | 6 | 7 | 8 | 9 | 10 |
|---|---|---|---|---|---|---|---|---|---|---|
| Tn pour i=1 | 1 | 1 | 0,95 | 0,9 | 0,9 | 0,85 | 0,85 | 0,8 | 0,8 | 0,8 |
| Tn pour i=2 | 1,2 | 1,2 | 1,15 | 1,1 | 1,1 | 1,05 | 1,05 | 1 | 1 | 1 |
| Tn pour i=3 | 1,4 | 1,4 | 1,35 | 1,3 | 1,3 | 1,25 | 1,25 | 1,25 | 1,2 | 1,2 |

Par exemple, si l'utilisateur sélectionne 4 tasses avec le niveau i=2, le système de commande 40 alimentera le moteur 12 pendant un temps T = 1,1 x 4 = 4,4s Dans une troisième variante de réalisation, la mémoire comporte une table avec le temps de fonctionnement du moteur pour un nombre de tasses et pour un niveau de force de café sélectionné.

| N | 1 | 2 | 3 | 4 | 5 | 6 | 7 | 8 | 9 | 10 |
|---|---|---|---|---|---|---|---|---|---|---|
| Tn pour i=1 | 1 | 2 | 2,8 | 3,6 | 4,4 | 5,2 | 5,9 | 6,6 | 7,2 | 7,8 |
| Tn pour i=2 | 1,2 | 2,4 | 3,4 | 4,4 | 5,4 | 6,4 | 7,3 | 8,2 | 9 | 9,9 |
| Tn pour i=3 | 1,4 | 2,8 | 4,0 | 5,2 | 6,4 | 7,6 | 8,7 | 9,8 | 10,8 | 11,8 |

Tel que représenté de manière schématique aux figures 8 et 9, le système de commande 40 comporte un moyen de coupure 42 de l'alimentation du moteur qui coupe l'alimentation du moteur 12 après l'écoulement du temps T pour la distribution de la quantité de mouture à distribuer, l'organe de manœuvre 16 étant toujours en position activée. Le moyen de coupure 42 pour un moteur DC est formé par un transistor ou par un relais et pour un moteur AC par un triac ou un relais.

En fonctionnement, l'utilisateur agit sur l'organe de sélection 41 pour afficher sur la zone d'affichage 46 le nombre de tasses de café qu'il souhaite réaliser, par exemple quatre. Il agit ensuite sur l'organe de sélection de la force du café 45 pour afficher sur la zone d'affichage 47 le niveau de force du café qu'il souhaite réaliser, par exemple « intense ». L'utilisateur va basculer le levier de manœuvre 17 et le maintenir dans la position activée : le dispositif d'ouverture et de fermeture 16 de l'orifice 14 passe en position ouverte qui est détectée par l'interrupteur 32. Le système de commande 40 commande alors la rotation du moteur 12 pendant un temps T calculé à partir des éléments stockés dans la mémoire 44. Une fois le temps T écoulé, le système de commande 40 commande le moyen de coupure 42 qui coupe l'alimentation du moteur 12 pour stopper la distribution de mouture. L'utilisateur peut alors relâcher le levier de manœuvre 17 qui revient en position de repos sous l'action du ressort. Le dispositif d'ouverture et de fermeture 16 de l'orifice 14 passe en position fermée.

Si l'utilisateur relâche le levier de manœuvre 17 avant l'écoulement du temps T, le système de commande 40 détecte la position ouverte de l'interrupteur 32 et commande le moyen de coupure 42 qui coupe l'alimentation du moteur 12 pour stopper la distribution de mouture. Le système de commande garde dans sa mémoire 44 l'état dans lequel il s'est arrêté pendant un temps donné, par exemple 30 secondes. Si l'utilisateur rebascule le levier de manœuvre 17 dans la position activée avant l'écoulement des 30 secondes, le système de commande 40 termine le cycle de distribution de mouture programmée.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection l'invention tel que défini par les revendications.

Ainsi, on peut également envisager un organe de manœuvre différent du levier de manœuvre 17, par exemple une molette ou un bouton poussoir.

Dans une variante de réalisation, l'organe de manœuvre peut comporter un moteur ou un vérin pour permettre d'automatiser le fonctionnement de la machine à café.

## Revendications

1. Machine à café (1) comportant une zone d'infusion (7), un réservoir de stockage (5) de café moulu agencé au-dessus de la zone d'infusion (7) et un dispositif de transfert de mouture du réservoir de stockage (5) vers la zone d'infusion à travers un orifice (14) ainsi qu'un système de commande (40) comportant au moins un organe de sélection (41) d'une quantité de mouture à distribuer et des moyens de mesure et/ou d'évaluation (44) de ladite quantité de mouture à distribuer, ledit dispositif de transfert de mouture comportant un organe de distribution (9) entrainé en rotation par un moteur (12), le dispositif de transfert de mouture comportant un organe de manœuvre (17) d'un dispositif d'ouverture et de fermeture (16) de l'orifice (14), ledit dispositif d'ouverture et de fermeture (16) étant mobile entre une position ouverte et une position fermée, l'organe de manœuvre (17) étant mobile entre une position activé dans laquelle le dispositif d'ouverture et de fermeture (16) est en position ouverte et une position de repos dans laquelle le dispositif d'ouverture et de fermeture (16) est en position fermée et **caractérisée en ce que en ce que** le système de commande (40) comporte un organe de détection (32) de la position ouverte du dispositif d'ouverture et de fermeture (16) et un moyen de coupure (42) de l'alimentation du moteur (12), le système de commande devant détecter la position ouverte avec l'organe de détection (32) pour alimenter le moteur (12) et transférer la quantité de mouture à distribuer et le système de commande coupant l'alimentation du moteur (12) lorsque les moyens de mesure et/ou d'évaluation (44) détectent que la quantité de mouture distribuée correspond à la quantité de mouture à distribuer sélectionnée.

2. Machine à café (1) selon la revendication 1, **caractérisée en ce que** le système de commande (40) comporte un afficheur (43) muni d'une zone d'affichage (46) d'un nombre de tasses de café à préparer, l'organe de sélection (41) de la quantité de mouture à distribuer permettant de sélectionner ledit nombre de tasses.

3. Machine à café (1) selon la revendication 2, **caractérisée en ce que** les moyens de mesure et/ou d'évaluation de la quantité de mouture à distribuer comporte une mémoire (44) agencée dans le système de commande (40) et dans laquelle est stocké un temps prédéterminé d'alimentation du moteur (32) pour distribuer une quantité de mouture pour une tasse.

4. Machine à café (1) selon la revendication 3, **caractérisée en ce que** le système de commande (40) comporte un organe de sélection de la force du café (45) qui accroit et/ou décroit le temps prédéterminé d'alimentation du moteur (12).

5. Machine à café (1) selon l'une quelconque des revendications 3 ou 4, **caractérisée en ce que** la mémoire (44) du système de commande (40) comporte une table associant un numéro d'ordre n de distribution d'une tasse et un temps prédéterminé Tn, au moins un temps prédéterminé Tn étant supérieur au temps prédéterminé Tn+1.

6. Machine à café (1) selon l'une quelconque des revendications 1 à 5, **caractérisée en ce que** le moyen de coupure (42) du moteur est formé par un triac, par un transistor ou par un relais.

7. Machine à café (1) selon l'une quelconque des revendications 1 à 6, **caractérisée en ce que** le dispositif de transfert de mouture comporte un ressort de rappel de l'organe de manœuvre (17) de la position activée vers la position de repos et du dispositif d'ouverture et de fermeture (16) de l'orifice (14), de la position ouverte vers la position fermée.

8. Machine à café (1) selon l'une quelconque des revendications 1 à 7, **caractérisée en ce que** l'organe de manœuvre est formé par un levier de manœuvre (17).

9. Machine à café (1) selon la revendication 8, **caractérisée en ce que** le levier de manœuvre (17) est agencé de manière verticale dans la position de repos et basculé de manière horizontale dans la position activée.

10. Machine à café (1) selon l'une des revendications 1 à 9, **caractérisée en ce que** le dispositif de transfert comporte des moyens de translation (18) du dispositif d'ouverture et de fermeture (16) de l'orifice (14), de la position ouverte vers la position fermée et réciproquement.

## Patentansprüche

1. Kaffeemaschine (1), die eine Brühzone (7), einen Lagerbehälter (5) für gemahlenen Kaffee, der oberhalb der Brühzone (7) eingerichtet ist, und eine Vorrichtung zum Transfer von Mahlgut von dem Lagerbehälter (5) zu der Brühzone durch eine Öffnung (14) sowie ein Steuersystem (40) umfasst, das mindestens ein Auswahlorgan (41) einer zu verteilenden Mahlgutmenge und Mess- und/oder Bewertungsmittel (44) der zu verteilenden Mahlgutmenge umfasst, wobei die Vorrichtung zum Transfer von Mahlgut ein Verteilungsorgan (9) umfasst, das in Drehung von einem Motor (12) angetrieben ist, wobei die Vorrichtung zum Transfer von Mahlgut ein Bedienungsorgan (17) einer Öffnungs- und Schließvorrichtung (16) der Öffnung (14) umfasst, wobei die Öffnungs- und Schließvorrichtung (16) zwischen einer offenen Position und einer geschlossenen Position beweglich ist, das Bedienungsorgan (17) zwischen einer aktivierten Position, in der die Öffnungs- und Schließvorrichtung (16) in offener Position ist, und einer Ruheposition, in der die Öffnungs- und Schließvorrichtung (16) in geschlossener Position ist, beweglich ist, und **dadurch gekennzeichnet, dass** das Steuersystem (40) ein Erfassungsorgan (32) der offenen Position der Öffnungs- und Schließvorrichtung (16) und ein Unterbrechungsmittel (20) der Versorgung des Motors (12) umfasst, wobei das Steuersystem die offene Position des Erfassungsorgans (32) erfassen soll, um den Motor (12) zu versorgen und die zu verteilenden Mahlgutmenge zu transferieren, und das Steuersystem die Versorgung des Motors (12) unterbricht, wenn die Mess- oder Bewertungsmittel (44) erfassen, dass die verteilte Mahlgutmenge der ausgewählten zu verteilenden Mahlgutmenge entspricht.

2. Kaffeemaschine (1) nach Anspruch 1, **dadurch gekennzeichnet, dass** das Steuersystem (40) einen Anzeiger (43) umfasst, der mit einer Anzeigezone (46) einer Anzahl vorzubereitender Tassen Kaffee versehen ist, wobei das Auswahlorgan (41) der zu verteilenden Mahlgutmenge das Auswählen der Anzahl von Tassen erlaubt.

3. Kaffeemaschine (1) nach Anspruch 2, **dadurch gekennzeichnet, dass** die Mess- und/oder Bewertungsmittel der zu verteilenden Mahlgutmenge einen Speicher (44) umfassen, der in dem Steuersystem (40) eingerichtet ist, und in dem eine vorbestimmte Versorgungszeit des Motors (32) zum Verteilen einer Mahlgutmenge für eine Tasse gespeichert ist.

4. Kaffeemaschine (1) nach Anspruch 3, **dadurch gekennzeichnet, dass** das Steuersystem (40) ein Auswahlorgan der Stärke des Kaffees (45) umfasst, das die vorbestimmte Versorgungszeit des Motors (12) erhöht und/oder verringert.

5. Kaffeemaschine (1) nach einem der Ansprüche 3 oder 4, **dadurch gekennzeichnet, dass** der Speicher (44) des Steuersystems (40) eine Tabelle umfasst, die eine Ordnungsnummer n zur Verteilung einer Tasse und eine vorbestimmte Zeit Tn assoziiert, wobei mindestens eine vorbestimmte Zeit Tn größer ist als die vorbestimmte Zeit Tn+1.

6. Kaffeemaschine (1) nach einem der Ansprüche 1 bis 5, **dadurch gekennzeichnet, dass** das Unterbrechungsmittel (42) des Motors aus einem Triac, einem Transistor oder einem Relais gebildet ist.

7. Kaffeemaschine (1) nach einem der Ansprüche 1 bis 6, **dadurch gekennzeichnet, dass** die Vorrichtung zum Transferieren von Mahlgut eine Rückstellfeder des Bedienungsorgans (17) von der aktivierten Position zu der Ruheposition und der Öffnungs- und Schließvorrichtung (16) der Öffnung (14) von der offenen Position zu der geschlossenen Position umfasst.

8. Kaffeemaschine (1) nach einem der Ansprüche 1 bis 7, **dadurch gekennzeichnet, dass** das Bedienungsorgan aus einem Bedienungshebel (17) gebildet ist.

9. Kaffeemaschine (1) nach Anspruch 8, **dadurch gekennzeichnet, dass** der Bedienungshebel (17) vertikal in der Ruheposition und auf horizontale Art gekippt in der aktivierten Position eingerichtet ist.

10. Kaffeemaschine (1) nach einem der Ansprüche 1 bis 9, **dadurch gekennzeichnet, dass** die Transfervorrichtung Verschiebungsmittel (18) der Öffnungs- und Schließvorrichtung (16) der Öffnung (14) von der offenen Position zu der geschlossenen Position und umgekehrt umfasst.

## Claims

1. Coffee machine (1) with a brew zone (7), a ground coffee storage tank (5) arranged above the brew zone (7) and a device for transferring the grind from the storage tank (5) to the brew zone through an orifice (14) and a control system (40) comprising at least one element (41) for selection of a quantity of grind to be dispensed and means (44) of measuring and/or evaluating said quantity of grind to be dispensed, said grind transfer device comprising a dispensing element (9) driven in rotation by a motor (12), the grind transfer device comprising:
an element (17) controlling operation of an opening and closing device (16) of the orifice (14), said opening and closing device (16) being free to move between an open position and a closed position, the operating element (17) being free to move between an active position in which the opening and closing device (16) is in the open position and a rest position in which the opening and closing device (16) is in the closed position, **characterized in that** the control system (40) comprises:
an element (32) for detection of the open position of the opening and closing device (16) and a means (42) for switching the motor (12) power supply off, the control system to detect the open position with the detection element (32) to supply power to the motor (12) and transfer the quantity of grind to be dispensed and the control system to cut off the power supply to the motor (12) when the measuring and/or evaluation means (44) detect that the quantity of grind dispensed corresponds to the selected quantity of grind to be dispensed.

2. Coffee machine (1) according to claim 1, **characterized in that** the control system (40) comprises a display (43) with a display area (46) to display a number of cups of coffee to be brewed, the element (41) for selection of the quantity of grind to be dispensed allowing selection of said number of cups.

3. Coffee machine (1) according to claim 2, **characterized in that** the means of measuring and/or evaluating the quantity of grind to be dispensed comprise a memory (44) arranged in the control system (40) and in which a predetermined motor power supply time (32) is stored to dispense a quantity of grind for one cup.

4. Coffee machine (1) according to claim 3, **characterized in that** the control system (40) comprises a coffee strength selection element (45) that increases and/or decreases the predetermined motor power supply time (12).

5. Coffee machine (1) according to either of claims 3 or 4, **characterized in that** memory (44) of the control system (40) comprises a table combining a cup dispensing order number n and a predetermined time Tn, at least one predetermined time Tn being greater than the predetermined time Tn+1.

6. Coffee machine (1) according to any one of claims 1 to 5, **characterized in that** the motor cutoff means (42) is formed by a triac, by a transistor or by a relay.

7. Coffee machine (1) according to any one of claims 1 to 6, **characterized in that** the grind transfer device comprises a spring to return the operating element (17) from the active position to the rest position and the device (16) for opening and closing the orifice (14), from the open position to the closed position.

8. Coffee machine (1) according to any one of claims 1 to 7, **characterized in that** the operating element is formed by an operating lever (17).

9. Coffee machine (1) according to claim 8, **characterized in that** the operating lever (17) is arranged vertically in the rest position and is tilted horizontally in the active position.

10. Coffee machine (1) according to one of claims 1 to 9, **characterized in that** the transfer device comprises means (18) of translating the device (16) for opening and closing the orifice (14), from the open position to the closed position and vice versa.
